Europäisches Patentamt

European Patent Office

Office européen des brevets

(11) Numéro de publication: **0 026 515**
**B1**

(12) **FASCICULE DE BREVET EUROPEEN**

(45) Date de publication du fascicule du brevet: **12.12.84**

(21) Numéro de dépôt: **80200844.1**

(22) Date de dépôt: **10.09.80**

(51) Int. Cl.³: **A 61 C 5/14,** A 61 C 17/04,
A 61 C 19/00

(54) **Pare-langue paralléliseur fixe pour la médecine dentaire.**

(30) Priorité: **14.09.79 BE 46940**

(43) Date de publication de la demande:
**08.04.81 Bulletin 81/14**

(45) Mention de la délivrance du brevet:
**12.12.84 Bulletin 84/50**

(84) Etats contractants désignés:
**AT CH DE FR GB IT LI LU NL SE**

(56) Documents cités:
**DE-C- 468 959**
**FR-A- 416 637**
**FR-A-1 045 161**
**FR-A-2 347 918**
**US-A-1 805 309**
**US-A-1 959 508**
**US-A-2 758 374**
**US-A-4 017 975**

(73) Titulaire: **PROMODENT, Société anonyme**
**21, rue Léon Mignon**
**B-4000 Liège (BE)**

(72) Inventeur: **Streel, Robert**
**21, rue Léon Mignon**
**B-4000 Liège (BE)**

(74) Mandataire: **Dellicour, Paul**
**Office de Brevets E. Dellicour rue Fabry 18/012**
**B-4000 Liège (BE)**

Courier Press, Leamington Spa, England.

## Description

La présente invention concerne la médecine dentaire et est relative à un instrument destiné à faciliter le travail en bouche lors de la préparation des piliers de bridge et lors de la pose de racines artificielles, et ce plus particulièrement dans les régions postérieures du maxillaire inférieur.

L'instrument suivant l'invention a un double but: d'une part, dégager le champ opératoire au maximum, en permettant une aspiration de la salive et une protection de la langue optimales et, d'autre part, déterminer l'axe de taille ou d'insertion des piliers postérieurs en fonction de l'axe des éléments antérieurs. Cet instrument peut être utilisé séparément ou simultanément pour l'une et l'autre fonctions, et il est particulièrement utile en cas de travail prolongé en bouche, quel que soit l'endroit considéré.

Les instruments du même type existant sur le marché actuellement ont l'inconvénient d'être mobiles de manière intempestive en cours d'intervention.

Parmi les instruments connus de ce genre, il existe un appareil appelé pompe à salive, décrit dans le brevet français N° 1 045.161, qui comporte un tube d'aspiration vertical, relié à un bec d'aspiration portant une plaque destinée à repousser la langue, tube sur lequel sont montés de manière réglable et verrouillable, d'une part, une plaque de support s'ajustant sur les dents de la mâchoire inférieure et, d'autre part une plaque légèrement incurvée venant s'appuyer sur le côté inférieur du menton.

Un pare-langue paralléliseur fixe conforme à l'invention est du type de l'appareil décrit dans ce brevet français N° 1.045.161, du fait qu'il comporte aussi un pare-langue proprement dit en forme de plaque substantiellement verticale, un moyen de fixation à la mandibule dans sa partie antérieure et un moyen de fixation à la mandibule dans la région sous-mentonnière réglable et verrouillable, et il est caractérisé en ce que la plaque pare-langue comporte un moyen de positionnement d'un organe paralléliseur destiné à transférer dans la région postérieure de la bouche la direction de l'axe des dents antérieures, et en ce que le moyen de fixation à la mandibule dans sa partie antérieure est constitué pour une gouttière en U renversé, dont les parois latérales ou branches du U forment une courbe pour s'adapter à la courbe de l'arcade inférieure et dont le volume interne est destiné à être rempli d'une matière plastique solidifiable venant emprisonner la région mandibulaire antérieure, c'est-à-dire le bord incisal avec les dents ou la partie supérieure de la crête, et empêchant toute mobilité intempestive de l'appareil en cours d'intervention.

Suivant l'invention, la plaque pare-langue et le moyen de fixation sous-mentonnier sont reliés sur la gouttière avec un support intermédiaire par un organe d'assemblage réglable et verrouillable, de manière à obtenir une fixation au niveau adéquat par rapport au bord incisal ou, en l'absence de dents, à la partie supérieure de la crête.

L'invention est décrite maintenant plus en détail sur la base des dessins annexés, à titre d'exemple uniquement, montrant en:

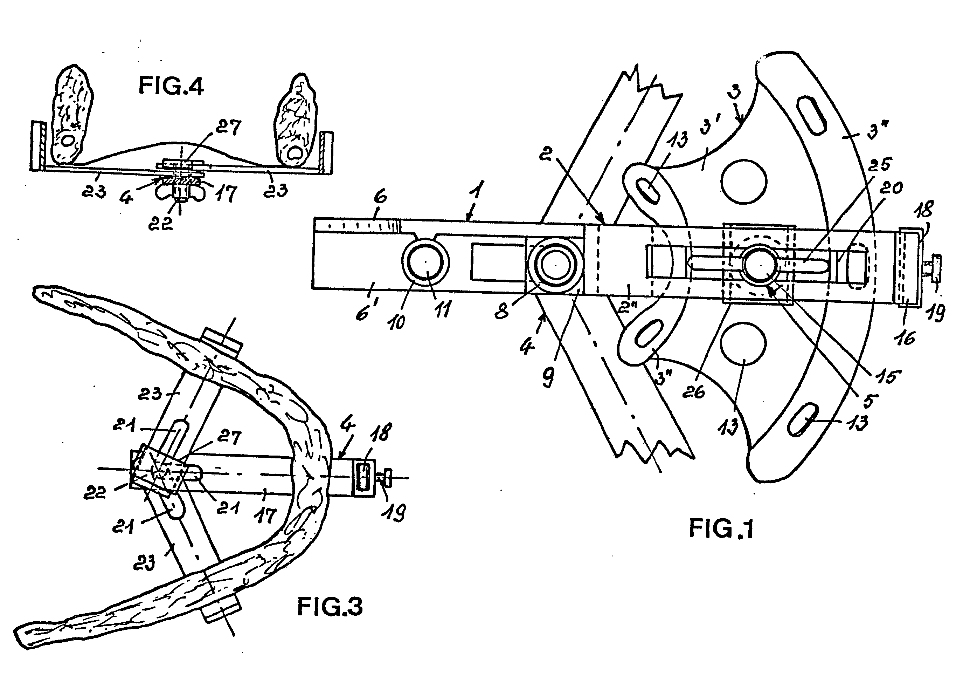

Figure 1 une vue en plan par dessus d'un instrument conforme à l'invention fixé à l'arcade inférieure;

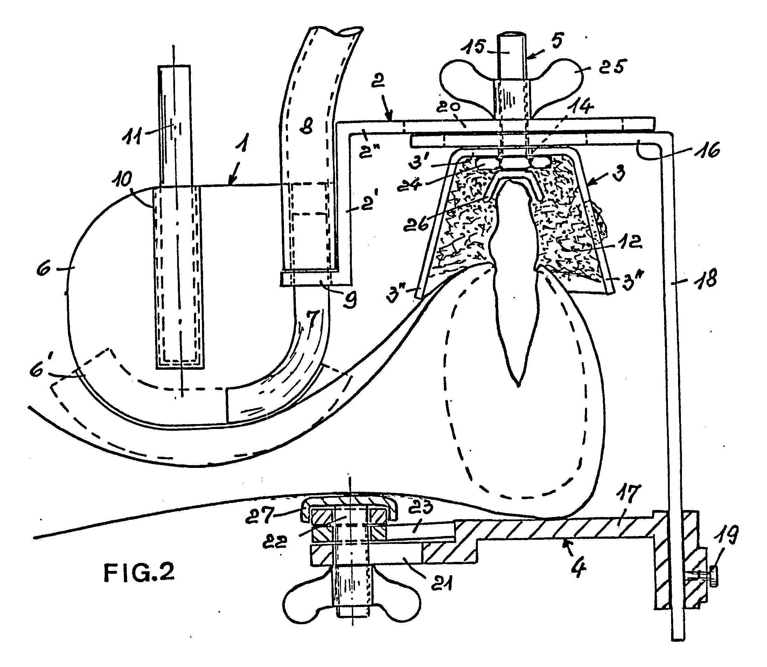

Figure 2 une coupe sagittale de la partie médiane de la bouche passant par le pare-langue proprement dit;

Figure 3, en vraie grandeur, une coupe horizontale au niveau de la partie inférieure de la mandibule, montrant le dispositif de fixation sous-mentonnier, et

Figure 4, en vraie grandeur, une coupe frontale au niveau des bras latéraux du dispositif de fixation sous-mentonnier de figure 3.

L'instrument réalisé suivant l'invention et représenté sur les dessins se compose de cinq partie assemblées: le pare-langue proprement dit 1 avec son support intermédiaire 2, un dispositif de fixation à l'arcade inférieure ou gouttière 3, un dispositif de fixation sous-mentonnier 4 et un organe d'assemblage 5.

Le pare-langue proprement dit est constitué d'une plaque 6 de faible épaisseur, en forme de disque, recourbée à la partie inférieure 6' pour adoucir la compression au niveau du plancher de la bouche et permettre le drainage de la salive à l'extrémité d'un tube métallique 7 utilisé comme canule d'aspiration et sur lequel s'emboîte un raccord flexible 8 assurant le relais vers l'extérieur. Le refoulement de la langue est obtenu par le blocage en position ad hoc du support intermédiaire 2.

Le canule terminale 7 est maintenue en place à la partie médiane antérieure du pare-langue par une pièce horizontale 9 reliée d'un part à la plaque verticale 6 et, d'autre part, à la branche inférieure 2' du support intermédiaire 2.

Un cylindre creux 10, appliqué sur la plaque verticale 1 en son milieu et orienté perpendiculairement à la branche supérieure 2" du support intermédiaire 2, sert à abriter une tige de paralléliseur 11 dans l'axe adéquat pour permettre le transfert de la direction axiale des dents antérieures dans la région postérieure. L'axe d'insertion d'une future prothèse est parallèle à la direction du cylindre 10. Le dispositif de fixation à l'arcade inférieure 3 consiste en une gouttière ajourée, de morphologie voisine de celle des porte-empreintes classiques. Cette gouttière est formée d'une paroi supérieure 3' et de deux parois latérales 3"; la paroi supérieure, dont la morphologie est adaptée à l'arcade inférieure dans sa partie antérieure, possède un bord externe plus long et moins incurvé et les parois latérales sont incurvées selon des rayons différents et inclinées par rapport à la paroi supérieure en assurant un évasement inférieur.

Le pare-langue 1 avec son support 2 est fixé à la mandibule dans sa partie antérieure par l'intermédiaire de la gouttière 3 remplie d'une substance plastique 12, dont la solidification provoque l'immobilisation emprisonnant la région mandibulaire antérieure en position favorable, le calage de cette substance plastique étant assuré par débordement de la matière au travers d'orifices 13 prévus à cet effet. Outre ces orifices de rétention, la gouttière 3 est encore percée dans sa partie médiane d'un orifice cylindrique 14 permettant le passage d'une tige filetée 15 constituant l'axe de fixation de l'ensemble et faisant partie de l'organe d'assemblage 5.

Le dispositif de fixation sous-mentonnier se compose de deux branches horizontales 16, 17 réunies entre elles par une branche verticale 18, la branche horizontale 17 étant montée de manière amovible et le blocage à bonne hauteur étant assuré par un verrou de fixation 19. La branche horizontale supérieure 16 est montée sur la tige 15 par l'intermédiaire d'une coulisse 20 pour permettre un réglage dans le sens antéro-postérieur, tandis que la branche horizontale inférieure 17 possède également vers son extrémité interne une coulisse 21 pour le montage réglable d'une vis de fixation 22 assurant le maintien de deux bras 23 destinés au soutien latéral sous-mentonnier et pourvus également d'une coulisse 21.

Les pièces 2, 3 et 4 sont assemblées entre elles au niveau du bord incisal de l'arcade inférieure par l'organe d'assemblage 5, c'est-à-dire la tige ou vis de blocage 15 munie à sa base d'un contre-écrou 24. On peut ainsi régler la dimension verticale en fonction de la morphologie de l'arcade et de la situation des organes dentaires restants. Par un écrou papillon 25, on assure la stabilisation définitive de tous les éléments en bonne place après ajustage de la gouttière 3 parallèlement à l'axe du cylindre 10 du pare-langue 1.

Il faut noter que l'extrémité inaccessible ou tête de la vis de réglage 15 est constituée par une pièce en forme 26 destinée à venir reposer sur les faces linguale et vestibulaire des dents ou des crêtes, afin de caler l'axe de la vis et ainsi éviter sa mobilité au moment du serrage.

Il en est de même pour l'extrémité ou tête de la vis de fixation 22 du dispositif de fixation sous-mentonnier 4, celle-ci aussi est constituée par une pièce en forme 27 qui vient recouvrir latéralement le bras de soutien latéral supérieur 23.

Lorsque l'instrument suivant l'invention est utilisé pour la réalisation de grands ensembles, la gouttière 3 est déplacée latéralement pour permettre la mise en évidence de l'axe de référence dans le prolongement de la cavité pulpaire de la dent antérieure correspondante.

L'instrument suivant l'invention assure une complète immobilisation en cours d'intervention, se maintient dans la position verticale par compression sous-mentonnière et refoule la langue en bonne position par un calage adéquat. Il permet de dégager au maximum le champ opératoire et facilite la préparation et la pose des piliers postérieurs d'une prothèse fixe.

**Revendications**

1. Pare-langue paralléliseur fixe comportant un pare-langue proprement dit (1) en forme de plaque substantiellement verticale (6), un moyen (3) de fixation à la mandibule dans sa partie antérieure et un moyen (4) de fixation à la mandibule dans la région sous-mentonnière réglable et verrouillable, caractérisé en ce que la plaque pare-langue (6) comporte un moyen de positionnement (10) d'un organe paralléliseur (11) destiné à transférer dans la région postérieure de la bouche la direction de l'axe des dents antérieures, et en ce que le moyen (3) de fixation à la mandibule dans sa partie antérieure est constitué par une gouttière en U renversé, dont les parois latérales ou branches du U (3″) sont conformées en plan sensiblement selon la courbe de l'arcade inférieure et dont le volume interne est destiné à être rempli d'une matière plastique solidifiable (12) venant emprisonner la région mandibulaire antérieure, c'est-à-dire le bord incisal des dents ou, en l'absence de dents, la partie supérieure de la crête, pour empêcher toute mobilité intempestive de l'appareil en cours d'intervention.

2. Pare-langue suivant la revendication 1, caractérisé en ce que la plaque pare-langue (6) et le moyen de fixation sous-mentonnier (4) sont reliés sur la gouttière (3) avec un support intermédiaire (2) par un organe d'assemblage (5) réglable et verrouillable, de manière à obtenir une fixation au niveau adéquat par rapport au bord incisal ou, en l'absence de dents, à la partie supérieure de la crête.

3. Pare-langue suivant la revendication 2, caractérisé en ce que l'extrémité inaccessible ou tête (26) de l'organe d'assemblage (5), telle qu'une tige filetée (15) ou une vis, sur la gouttière (3) est conformée de manière à venir reposer sur les faces linguale et vestibulaire des dents ou des crêtes et à éviter la mobilité dudit organe au moment du serrage.

4. Pare-langue suivant l'une quelconque des revendications 1 et 2, caractérisé en ce que la plaque pare-langue (6), de faible épaisseur et en forme de disque, est recourbée à la partie inférieure (6′) pour permettre le drainage de la salive à l'extrémité d'un tube (7), monté sur ladite plaque pour former une canule d'aspiration et relié à un raccord (8) flexible assurant le relais vers l'extérieur.

5. Pare-langue suivant la revendication 1, caractérisé en ce que le moyen de positionnement (10) appliqué sur la plaque pare-langue (6) en son milieu est un cylindre creux orienté perpendiculairement au support intermédiaire (2) et est destiné à recevoir une tige comme organe paralléliseur (11).

6. Pare-langue suivant la revendication 1, caractérisé en ce que la gouttière (3) comporte des orifices (13) destinés à permettre le débordement de la matière (12) et par suite son calage.

7. Pare-langue suivant la revendication 1, caractérisé en ce que la paroi supérieure (3') de la gouttière (3), présentant une morphologie adaptée à l'arcade inférieure dans sa partie antérieure, possède un bord externe plus long et moins incurvé que le bord interne, et en ce que les parois latérales (3'') de ladite gouttière sont incurvées selon des rayons différents et sont inclinés par rapport à la paroi supérieure (3') de manière à assurer un évasement inférieur.

8. Pare-langue suivant la revendication 1, caractérisé en ce que dans le moyen de fixation sous-mentonnier (4) est en forme de U et consiste en deux bras horizontaux (16, 17) reliés par un bras vertical (18), en ce que le bras horizontal supérieur (16) est lié à la gouttière (3) et le bras horizontal inférieur (17) est monté sur le bras vertical (18) de manière réglable en hauteur et porte à son extrémité interne, opposée au bras vertical (18), un verrou (22) de fixation sous-mandibulaire, et en ce que deux bras (23) de soutien latéral réglables sont montés sur l'axe dudit verrou de fixation (22).

9. Pare-langue suivant la revendication 8, caractérisé en ce que l'extrémité inaccessible ou tête du verrou de fixation (22) sous-mandibulaire est constituée par une pièce en forme (27) destinée à recouvrir latéralement le bras (23) supérieur de soutien latéral et ainsi à éviter la mobilité de la tige du verrou (22) au moment du serrage.

## Patentansprüche

1. Zungenschutz mit festem Parallelanzeiger für die Zahnheilkunde bestehend aus genaugenommen einem Zungenschutz (1) in Form einer im wesentlichen vertikalen Platte (6), einer Befestigungsvorrichtung (3) am Unterkiefer, und zwar an seiner Vorderpartie und aus einer Befestigungsvorrichtung (4) am Unterkiefer, und zwar unterhalb des Kinns, welche verstellbar und verriegelbar sind, dadurch gekennzeichnet, daß die Zungenschutzplatte (6) eine Positionierungsvorrichtung (10) für den Parallelanzeiger (11) enthält, der dazu bestimmt ist, im vorderen Bereich des Mundes die Richtung der Achse der vorderen Zähne anzugeben, und daß die Befestigung (3) an der Vorderpartie des Unterkiefers aus einer Schiene in Form eines umgekehrten U besteht, dessen Seitenwände oder Schenkel (3'') genau an die Krümmung des unteren Bogens angepaßt sind, und in dessen Inneres eine festwerdende Kunststoffmasse (12) gefüllt werden kann und so den Bereich des vorderen Unterkiefers festhält, d.h. den Schneiderand der Zähne oder, wenn diese fehlen, den oberen Bereich der Krone, um jede unangebrachte Bewegung des Apparates während des Eingriffs zu verhindern.

2. Zungenschutz gemäß Anspruch 1, dadurch gekennzeichnet, daß die Zungenschutzplatte (6) und die Befestigungsvorrichtung (4) unterhalb des Kinns auf der Schiene (3) mit einem Zwischenstück (2) durch ein Verbindungselement (5) derart verstellbar und verriegelbar verbunden sind, daß in geeigneter Höhe in bezug auf die Zahnschneide oder beim Fehlen der Zähne, auf dem oberen Teil der Krone eine Befestigung erreicht wird.

3. Zungenschutz gemäß Anspruch 2, dadurch gekennzeichnet, daß das unzugängliche Ende oder die Spitze (26) des Verbindungselements (5), beispielsweise eine Verstellspindel (15) oder eine Schraube, der Schiene (3) so amgepaßt sind, daß sie auf den lingualen oder vestibulären Flächen der Zähne oder Kronen aufliegen und die Beweglichkeit des Elements zum Zeitpunkt der Verriegelung auszuschließen.

4. Zungenschutz gemäß einem der Ansprüche 1 oder 2, dadurch gekennzeichnet, daß die Zungenschutzplatte (6), von geringer Dicke und scheibenförmig ist, an ihrem unteren Teil (6') zurückgebogen ist, um eine Speicheldrainage am Ende eines Rohres (7) zu ermöglichen, welches auf die besagte Platte angebracht ist und eine Atemkanüle darstellt, und welches an eine flexible Verbindung (8) angeschlossen ist, was den Kontakt nach außen zu sicherstellt.

5. Zungenschutz gemäß Anspruch 1, dadurch gekennzeichnet, daß die Positioniervorrichtung (10), welche auf der Mitte der Zungenschutzplatte (6) angebracht ist, ein Hohlzylinder ist, welcher senkrecht zum Zwischenstück (2) angeordnet ist und dazu bestimmt ist, eine Spindel als Parallelanzeiger (11) aufzunehmen.

6. Zungenschutz gemäß Anspruch 1, dadurch gekennzeichnet, daß die Schiene (3) Durchlässe (13) aufweist, die das Überlaufen des Materials (12) zulassen sowie als Folge desse festsetzen.

7. Zungenschutz gemäß Anspruch 1, dadurch gekennzeichnet, daß die obere Wand (3') der Schiene (3), welche in ihrem vorderen Bereich eine Form angepaßt an die untere Krümmung darstellt, einen äußeren Rand besitzt, der länger und weniger gekrümmt ist, als der innere Rand, und daß die Seitenwände (3'') der besagten Schiene (3) gemäß den unterschiedlichen Radien gekrümmt sind und schräggestellt sind im Verhältnis zur oberen Wand (3'), um so eine untere Ausweitung zu erreichen.

8. Zugenschutz gemäß Anspruch 1, dadurch gekennzeichnet, daß die Befestigung unterhalb des Kinns (4) U-förmig ist und aus zwei horizontalen Armen (16, 17) besteht, die durch einen vertikalen Arm (18) verbunden sind, daß der obere horizontale Arm (16) mit der Schiene (3) verbunden ist und der untere horizontale Arm (17) auf den vertikalen Arm (18) in der Höhe verstellbar montiert ist und an seinem inneren Ende gegenüber dem vertikalen Arm (18) einen Befestigungsriegel (22) für unterhalb des Unterkiefers besitzt, und daß zwei verstellbare seitliche Stützarme (23) auf die Mittellinie des besagten Befestigungsriegels (22) montiert sind.

9. Zungenschutz gemäß Anspruch 8, dadurch gekennzeichnet, daß das unzugängliche Ende oder die Spitze des Befestigungsriegels (22) für unterhalb des Unterkiefers aus einem Formstück (27) besteht, welches den oberen seitlichen Stützarm (23) seitlich überlappt und das dazu dient, die Mobilität der Riegelstange (22) im Moment des Verriegelns auszuschalten.

## Claims

1. Fixed parallelising spatula comprising a spatula proper (1) in the form of a substantially vertical plate (6), means (3) for attachment to the jaw bone in its front part and means (4) for fixing to the jaw bone in the under-chin region, said means being regulable and lockable, characterised in that the spatula plate (6) comprises means (10) for positioning a parallelising member (11) intended to transfer into the rear part of the mouth the direction of the axis of the front teeth, and in that the means (3) of attachment to the jaw bone in the front part consists of an inverted U channel, the lateral walls or branches of the U (3″) being shaped in a plane substantially according to the curve of the lower arch and the inner volume of which is intended to be filled with a hardenable plastic material (12) which traps the front part of the jaw, that is to say the incisal edge with teeth or, in the absence of teeth, the upper part of the crest of bone, to prevent any sudden movement of the apparatus during the course of the operation.

2. Spatula according to Claim 1, characterised in that the spatula plate (6) and the under-chin fixing means (4) are connected on the channel (3) with an intermediate support (2) by a regulable and lockable assembly means (5) in such a way as to obtain fixing at a suitable level in relation to the incisal edge or, if there are no teeth, to the upper part of the crest.

3. Spatula according to Claim 2, characterised in that the inaccessible end or head (26) of the assembly member (5), such as a threaded rod (15) or a screw, on the channel (3) is shaped in such a way as to rest on the lingual and vestibular faces of the teeth or crests and so as to avoid movement of the member at the moment of clamping.

4. Spatula according to any one of Claims 1 and 2, characterised in that the spatula plate (6) which is of minimal thickness and which takes the form of a disc, is curved in its lower part (6′) to allow drainage of saliva to the end of a tube (7) mounted on the said plate to form an aspiration cannula and which is connected to a flexible union (8) to carry it on and outwards.

5. Spatula according to Claim 1, characterised in that the positioning means (10) applied to the spatula plate (6) in the middle thereof is a hollow cylinder orientated at a right-angle to the intermediate support (2) and is intended to receive a rod as a parallelising member (11).

6. Spatula according to Claim 1, characterised in that the gutter (3) comprises orifices (13) intended to allow the material (12) to overflow and thus become keyed.

7. Spatula according to Claim 1, characterised in that the upper wall (3′) of the channel (3), having a morphology matching the lower arch in its front part, has an outer edge which is longer and less incurvate than the inner edge, and in that the lateral walls (3″) of the said channel are incurvate according to differing radii and are inclined in relation to the upper wall (3′) so as to provide a flaring-out at the bottom.

8. Spatula according to Claim 1, characterised in that the underchin fixing means (4) is of a U-shape and consists of two horizontal arms (16, 17) connected by a vertical arm (18), in that the upper horizontal arm (16) is connected to the channel (3) and the lower horizontal arm (17) is mounted on the vertical arm (18) in vertically regulable manner and carries at its inner end, opposite the vertical arm (18) a bolt (22) for under-jaw attachment, and in that two regulable lateral support arms (23) are mounted on the spindle of the said fixing bolt (22).

9. Spatula according to Claim 8, characterised in that the inaccessible end or head of the under-jaw fixing bolt (22) is constituted by a shaped member (17) designed to cover the laterally supporting upper arm (23) and so avoid movement of the bolt (22) at the moment of clamping.

FIG.4

FIG.3

FIG.1

0026515

FIG.2